(19) Europäisches Patentamt
European Patent Office
Office européen des brevets

(11) **EP 4 545 613 A1**

(12) **EUROPEAN PATENT APPLICATION**
published in accordance with Art. 153(4) EPC

(43) Date of publication:
**30.04.2025   Bulletin 2025/18**

(21) Application number: **23826789.2**

(22) Date of filing: **20.04.2023**

(51) International Patent Classification (IPC):
*C09D 175/06* (2006.01)

(52) Cooperative Patent Classification (CPC):
**C09D 175/06**

(86) International application number:
**PCT/JP2023/015708**

(87) International publication number:
**WO 2023/248600 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **20.06.2022   JP 2022098903**

(71) Applicant: **DIC Corporation
Tokyo 174-8520 (JP)**

(72) Inventors:
• **OKINO Kouhei**
  **Takaishi-shi, Osaka 592-0001 (JP)**
• **KUBOTA Takayuki**
  **Tokyo 174-8520 (JP)**
• **YAMAMOTO Shinya**
  **Takaishi-shi, Osaka 592-0001 (JP)**

(74) Representative: **Kraus & Lederer PartGmbB
Thomas-Wimmer-Ring 15
80539 München (DE)**

(54) **COATING AGENT FOR VAPOR DEPOSITED FILM, GAS BARRIER FILM, AND PACKAGING MATERIAL**

(57)   The present invention provides a coating agent for a vapor deposited film, the coating agent containing a urethane resin (A) and an aqueous medium (B), the urethane resin (A) being a reaction product of a composition that contains a polyester (A3) which is a polycondensate of a polycarboxylic acid component (A1) and a polyhydric alcohol component (A2), an active hydrogen group-containing compound (A4) having a hydrophilic group, and a diisocyanate (A5), the urethane resin (A) having an ester skeleton derived from the polyester (A3), the polycarboxylic acid (A1) containing at least one of an aromatic dicarboxylic acid and an acid anhydride thereof in an amount of 10 to 100% by mass based on 100% by mass of a total amount of the polycarboxylic acid (A1), the polyhydric alcohol component (A2) containing an alkylene glycol having 2 to 6 carbon atoms. The coating for a vapor deposited film exhibits superior gas barrier properties and adhesive properties under normal conditions and even after a retort treatment.

EP 4 545 613 A1

**Description**

TECHNICAL FIELD

The present invention relates to a coating agent for a vapor deposited film, a gas barrier film, and a packaging material.

BACKGROUND ART

In order to protect a content of a packaging material of a food, a drink, or the like from degradation due to oxygen, water vapor, and the like, such a packaging material is often demanded to have gas barrier properties.

As a method for imparting gas barrier to a packaging material, for example, a method of applying a gas barrier coating to a stretch film and a method of providing a gas barrier resin in a layer in a multilayer film through co-extrusion are widely used.

Among them, a vapor deposition method in which a vapor deposition layer is added onto a film is a superior method that can easily impart a gas barrier function regardless of the type of gas, and in particular, a transparent vapor deposited film is superior in transparency and in gas barrier properties under high humidity.

On the other hand, even if a transparent vapor deposited film is used, a problem of reduction in the gas barrier properties may arise after a retort (heating and press) treatment.

Thus, by overcoating a transparent vapor deposition layer of the transparent vapor deposited film with a resin layer, a transparent vapor deposited film that is superior in gas barrier properties and adhesive properties even after a retort treatment can be obtained.

As a versatile resin layer used for overcoating, polyvinyl alcohol (PVA) which is a gas barrier resin is used. However, since PVA is highly hydrophilic, delamination from the transparent vapor deposition layer may occur after a retort treatment. Thus, an overcoating layer that has high adhesive properties and gas barrier properties even after a retort treatment is desired.

As a technique for overcoating a transparent vapor deposition layer, for example, a transparent gas barrier laminated body having a gas barrier coating layer is disclosed, the gas barrier coating layer being obtained by applying, on an inorganic oxide layer (transparent vapor deposition layer), together with a water soluble polymer, an aqueous solution containing at least one or more of a metal alkoxide, a metal alkoxide hydrolysate, and tin chloride, or a gas barrier coating liquid mainly containing a water/alcohol mixed solution (for example, PTLs 1 and 2). However, since a water soluble polymer is poor in coating drying properties and a sol-gel process in which it is difficult to control a reaction is included, reaction management and reuse of the overcoating liquid are difficult, which leads to a problem of making the coating method cumbersome.

CITATION LIST

PATENT LITERATURE

PTL 1: JP 2012-101505 A
PTL 2: JP 2012-250470 A

SUMMARY OF INVENTION

TECHNICAL PROBLEM

Accordingly, a problem that the present invention is to solve is to provide a gas barrier film that is superior in gas barrier properties and adhesive properties under normal conditions and even after a retort treatment, and a coating agent for a vapor deposited film that can provide a packaging material with the gas barrier film, a gas barrier film, and a packaging material.

SOLUTION TO PROBLEM

As a result of an intensive and extensive studies, the present inventors have found that, by using a coating agent for a vapor deposited film, the coating agent containing a urethane resin, which is a reaction product of a composition that contains a specific polyester, an active hydrogen group-containing compound having a hydrophilic group, and a diisocyanate, and an aqueous medium, a gas barrier film that is superior in gas barrier properties and adhesive properties under normal conditions and even after a retort treatment and a packaging material with the gas barrier film can be obtained, thus completing the present invention.

Specifically, the present invention relates to a coating agent for a vapor deposited film, the coating agent containing a urethane resin (A) and an aqueous medium (B), the urethane resin (A) being a reaction product of a composition that contains a polyester (A3) which is a polycondensate of a polycarboxylic acid component (A1) and a polyhydric alcohol component (A2), an active hydrogen group-containing compound (A4) having a hydrophilic group, and a diisocyanate (A5), the urethane resin (A) having an ester skeleton derived from the polyester (A3), the polycarboxylic acid (A1) containing at least one of an aromatic dicarboxylic acid and an acid anhydride thereof in an amount of 10 to 100% by mass based on 100% by mass of a total amount of the polycarboxylic acid (A1), the polyhydric alcohol component (A2) containing an alkylene glycol having 2 to 6 carbon atoms.

In the coating agent for a vapor deposited film of the present invention, the composition preferably further contains a chain extender (A6).

The coating agent for a vapor deposited film of the present invention preferably contains a curing agent (C).

In the coating agent for a vapor deposited film of the present invention, the diisocyanate (A5) preferably contains tolylene diisocyanate in an amount of 50 to 100% by mass based on 100% by mass of a total amount of the diisocyanate (A5).

In the coating agent for a vapor deposited film of the present invention, the aqueous medium (B) is preferably water and/or isopropyl alcohol.

In the coating agent for a vapor deposited film of the present invention, the curing agent (C) is preferably at least one selected from the group consisting of a melamine crosslinking agent, a carbodiimide crosslinking agent, and a water dispersible polyisocyanate crosslinking agent.

The present invention relates to a gas barrier film obtained by coating a vapor deposited film with the coating agent for a vapor deposited film.

The present invention relates to a packaging material with the gas barrier film.

ADVANTAGEOUS EFFECTS OF INVENTION

In the coating agent for a vapor deposited film of the present invention, by using an aqueous medium, there arises no problem of a residual solvent, and by using a specific urethane resin, overcoating a vapor deposited film therewith leads to an increase of gas barrier properties against oxygen and water vapor under normal conditions and after a retort treatment, and a coating film obtained by using the coating agent for a vapor deposited film is superior in adherence onto a vapor deposited film (lamination strength) under normal conditions and after a retort treatment, and can provide a barrier film useful particularly for packaging foods, and is useful.

DESCRIPTION OF EMBODIMENTS

The present invention relates to a coating agent for a vapor deposited film, the coating agent containing a urethane resin (A) and an aqueous medium (B), the urethane resin (A) being a reaction product of a composition that contains a polyester (A3) which is a polycondensate of a polycarboxylic acid component (A1) and a polyhydric alcohol component (A2), an active hydrogen group-containing compound (A4) having a hydrophilic group, and a diisocyanate (A5), the urethane resin (A) having an ester skeleton derived from the polyester (A3), the polycarboxylic acid (A1) containing at least one of an aromatic dicarboxylic acid and an acid anhydride thereof in an amount of 10 to 100% by mass based on 100% by mass of the total amount of the polycarboxylic acid (A1), the polyhydric alcohol component (A2) containing an alkylene glycol having 2 to 6 carbon atoms.

By using the aqueous medium, the coating agent for a vapor deposited film has no problem of residual solvent, and when a vapor deposited film is overcoated therewith, the barrier properties against oxygen and water vapor under normal conditions and after a retort treatment increase, and a coating film obtained by using the coating agent for a vapor deposited film is superior also in adherence onto a vapor deposited film (lamination strength) under normal conditions and after a retort treatment, and is useful.

(Urethane Resin (A))

The coating agent for a vapor deposited film of the present invention is characterized by containing the urethane resin (A), the urethane resin (A) being a reaction product of a composition that contains the polyester (A3) which is a polycondensate of the polycarboxylic acid component (A1) and the polyhydric alcohol component (A2), the active hydrogen group-containing compound (A4) having a hydrophilic group, and the diisocyanate (A5), the urethane resin (A) having an ester skeleton derived from the polyester (A3), the polycarboxylic acid (A1) containing at least one of an aromatic dicarboxylic acid and an acid anhydride thereof in an amount of 10 to 100% by mass based on 100% by mass of the total amount of the polycarboxylic acid (A1), the polyhydric alcohol component (A2) containing an alkylene glycol having 2 to 6 carbon atoms.

The polyester (A3) is obtained by a polycondensation reaction of the polycarboxylic acid component (A1) and the polyhydric alcohol component (A2), has a hydroxy group or a carboxy group at a terminal, and can be reacted with the diisocyanate (A5).

In addition, since the urethane resin (A) has an ester skeleton derived from the polyester (A3), the urethane resin (A) is useful in terms of increasing the adherence to a vapor deposition surface and the gas barrier properties of a resulting coating film.

Furthermore, since the urethane resin (A) is a urethane resin obtained through a polyaddition reaction of the polyester (A3) (polyester polyol) and the diisocyanate (A5), followed by a further reaction with the active hydrogen group-containing compound (A4) having a hydrophilic group, the urethane resin (A) is a urethane resin having an aqueous dispersion stability due to the hydrophilic group and thus, the urethane resin (particles) is easily dispersed in an aqueous medium.

(Polycarboxylic Acid Component (A1))

The urethane resin (A) is characterized by being a reaction product of a composition that contains the polyester (A3) which is a polycondensate of the polycarboxylic acid component (A1) and the polyhydric alcohol component (A2), the active hydrogen group-containing compound (A4) having a hydrophilic group, and the diisocyanate (A5). By using the polycarboxylic acid component (A1), a coating film obtained by using the polyester (A3) has good adherence to a vapor deposition surface and gas barrier properties, and is useful.

Examples of the polycarboxylic acid component (A1) include succinic acid, adipic acid, azelaic acid, sebacic acid, and dodecanedicarboxylic acid. Examples of unsaturated bond-containing polycarboxylic acids include maleic anhydride, maleic acid, fumaric anhydride, and fumaric acid, examples of alicyclic polycarboxylic acids include 1,3-cyclopentanedicarboxylic acid and 1,4-cyclohexanedicarboxylic acid, examples of aromatic polycarboxylic acids include terephthalic acid, isophthalic acid, orthophthalic acid, pyromellitic acid, trimellitic acid, 1,4-naphthalenedicarboxylic acid, 2,5-naphthalenedicarboxylic acid, 2,6-naphthalenedicarboxylic acid, naphthalic acid, biphenyldicarboxylic acid, diphenic acid and anhydride thereof, 1,2-bis(phenoxy)ethane-p,p'-dicarboxylic acid, and anhydrides or ester-forming derivatives of the dicarboxylic acids; and p-hydroxybenzoic acid, p-(2-hydroxyethoxy)benzoic acid, and ester-forming derivatives of the dihydroxycarboxylic acid. Among them, from the viewpoint of increasing the gas barrier properties, an aromatic polycarboxylic acid or an acid anhydride thereof is more preferred, an aromatic dicarboxylic acid or an acid anhydride thereof is further preferred. One thereof can be used alone or two or more thereof can be used in combination.

The polycarboxylic acid (A1) is characterized by containing at least one of an aromatic dicarboxylic acid and an acid anhydride thereof in an amount of 10 to 100% by mass based on 100% by mass of the total amount of the polycarboxylic acid (A1), preferably in an amount of 40 to 100% by mass, more preferably in an amount of 60 to 100% by mass. Within the above range, a resulting coating film has superior adherence to a vapor deposition surface and gas barrier properties, and is useful.

(Polyhydric Alcohol Component (A2))

The urethane resin (A) is characterized by being a reaction product of a composition that contains the polyester (A3) which is a polycondensate of the polycarboxylic acid component (A1) and the polyhydric alcohol component (A2), the active hydrogen group-containing compound (A4) having a hydrophilic group, and the diisocyanate (A5), the polyhydric alcohol component (A2) containing an alkylene glycol having 2 to 6 carbon atoms. By using the polyhydric alcohol component (A2), a coating film obtained by using the resulting polyester (A3) has a good adherence to a vapor deposition surface and gas barrier properties, and is useful.

Examples of the polyhydric alcohol component (A2) include alkylene glycols, such as ethylene glycol, propylene glycol, 1,3-propanediol, 1,4-butylene glycol, 1,3-butylene glycol, 1,2-butylene glycol, 1,5-pentanediol, 1,6-hexanediol (hexamethylene glycol), neopentyl glycol, 3-methyl-1,5-pentanediol, and 1,3-or 1,4-cyclohexanediol, ether diols, such as diethylene glycol, triethylene glycol, and dipropylene glycol, and an alkenediol, such as 1,4-dihydroxy-2-butene. Among them, from the viewpoint that, the lower the number of carbon atoms between oxygen atoms contained in the polyhydric alcohol component is, the molecular chain is less liable to be excessively soft and is less liable to be permeable to oxygen, an alkylene glycol having 2 to 6 carbon atoms is contained, and preferably, an alkylene glycol having 2 to 4 carbon atoms is contained. One thereof can be used alone or two or more thereof can be used in combination.

The coating agent for a vapor deposited film of the present invention preferably contains the alkylene glycol having 2 to 6 carbon atoms in an amount of 10 to 100% by mass based on 100% by mass of the total amount of the polyhydric alcohol component (A2), more preferably in an amount of 20 to 100% by mass, and further preferably in an amount of 30 to 100% by mass. Within the above range, the resulting polyester has an appropriate hydrophilicity and reduction in the gas barrier properties and adhesive properties (adherence) of the coating film due to moisture after a retort treatment can be prevented, and is useful.

The blending ratio (molar ratio) of the polycarboxylic acid component (A1) and the polyhydric alcohol component (A2) is, from the viewpoint of obtaining the polyester (A3) having a hydroxy group at a terminal and achieving superior gas barrier properties and adhesive properties (adherence) to a vapor deposition surface of a coating film, preferably polycarboxylic acid component (A1) : polyhydric alcohol component (A2) = 1:1.01 to 4.0, more preferably polycarboxylic acid component (A1) : polyhydric alcohol component (A2) = 1:1.1 to 3.0.

(Polymerization Catalyst)

A polymerization catalyst used in a reaction for obtaining the polyester (A3) which is a polycondensate of the polycarboxylic acid component (A1) and the polyhydric alcohol component (A2) is not particularly limited, but, for example, at least one of an antimony compound, a germanium compound, a titanium compound, and an aluminum compound can be used. Among them, the titanium compound can be preferably used, and titanium tetraisopropoxide, titanium tetrabutaoxide, and the like are more preferred. One thereof can be used alone or two or more thereof can be used in combination.

As the amount of the polymerization catalyst blended, the polymerization initiator is preferably contained in an amount of 1 to 1000 ppm relative to the total amount of the reaction raw materials used, more preferably contained in an amount of 10 to 100 ppm. Within the above range, an esterification reaction proceeds well, and in the reaction with the diisocyanate (A5), the urethanization reaction is not impaired, which is preferable.

(Polyester (A3))

The coating agent for a vapor deposited film of the present invention is characterized by containing the urethane resin (A), the urethane resin (A) being a reaction product of a composition that contains the polyester (A3) which is a polycondensate of the polycarboxylic acid component (A1) and the polyhydric alcohol component (A2), the active hydrogen group-containing compound (A4) having a hydrophilic group, and the diisocyanate (A5). The polyester (A3) which is a polycondensate of the polycarboxylic acid component (A1) and the polyhydric alcohol component (A2) is not particularly limited, and can be obtained by a known and commonly used method (polycondensation reaction).

(Acid Number of Polyester Polyol (Polyester (A3)))

The acid number of the polyester polyol is, from the viewpoint of obtaining a polyester having a hydroxy group at a terminal, preferably 0 to 5 mgKOH/g, more preferably 0 to 1 mgKOH/g. When the acid number is within the above range, a polyester having a hydroxy group at a terminal can be obtained, and an increase in the molecular weight by the following reaction with the diisocyanate (A5) proceeds well, which is effective.

(Hydroxy Value of Polyester Polyol (Polyester (A3)))

The hydroxy value of the polyester polyol is, from the viewpoint of achieving superior adherence to a vapor deposition surface and gas barrier properties of a coating film, preferably 20 to 400 mgKOH/g, more preferably 40 to 250 mgKOH/g. When the hydroxy value is within the above range, the urethane resin (A) exhibits a good cohesive power after the following reaction with the diisocyanate (A5), and superior adherence to a vapor deposition surface and gas barrier properties of a coating film are developed, which is effective.

(Number Average Molecular Weight (Mn) of Polyester Polyol (Polyester (A3)))

The number average molecular weight (Mn) of the polyester polyol (polyester (A3)) is, from the viewpoint of achieving superior adherence to a vapor deposition surface and gas barrier properties of a coating film, preferably 280 to 5600, more preferably 450 to 2800. When the number average molecular weight (Mn) is within the above range, superior adherence to a vapor deposition surface and gas barrier properties of a coating film are developed, which is effective.

The blending ratio of the polyester (A3) in 100 parts by mass of the urethane resin (A) is, from the viewpoints of increasing the gas barrier properties of a resulting coating film and forming a uniform coating film owing to an increase in film formability, preferably 20 to 87 parts by mass, more preferably 42 to 81 parts by mass.

(Active Hydrogen Group-Containing Compound (A4) Having Hydrophilic Group)

The coating agent for a vapor deposited film of the present invention is characterized by containing the urethane resin (A), the urethane resin (A) being a reaction product of a composition that contains the polyester (A3) which is a polycondensate of the polycarboxylic acid component (A1) and the polyhydric alcohol component (A2), the active hydrogen group-containing compound (A4) having a hydrophilic group, and the diisocyanate (A5).

Since the active hydrogen group-containing compound (A4) having a hydrophilic group has a hydrophilic group, the urethane resin (A) (particles) can be easily dispersed in the aqueous medium (B), which can contribute to an increase in the gas barrier properties and adhesive properties (adherence to a substrate) of a resulting coating film, and is useful.

Examples of the active hydrogen group-containing compound (A4) having a hydrophilic group include compounds that contain a hydrophilic group, such as a nonionic group or an ionic group, and contain an active hydrogen group, such as an amino group or a hydroxy group, and specific examples thereof include an active hydrogen group-containing compound containing a nonionic group and an active hydrogen group-containing compound containing an ionic group.

An example of the active hydrogen group-containing compound containing a nonionic group is an active hydrogen group-containing compound containing a polyalkylene oxide group as a nonionic group, and examples thereof include polyoxyethylene glycol, an one-end-capped polyoxyethylene glycol, and a polyol having a polyoxyethylene side chain. An example of the active hydrogen group-containing compound containing an ionic group is an organic compound in which, for example, an anionic group such as carboxylic acid or a cationic group such as a quaternary amine is used together with two or more active hydrogen groups, such as hydroxy groups or amino groups. Among them, when an organic compound in which an anionic group (carboxy group) of a carboxylic acid is used together with two or more hydroxy groups is used as the active hydrogen group-containing compound (A4) having a hydrophilic group, since the organic compound has a carboxy group, the urethane resin (A) (particles) is easily dispersed in the aqueous medium (B) without an emulsifier or the like, which is preferable from the viewpoints of workability and prevention of bleedout of an emulsifier into a coating film.

Examples of the organic compound in which an anionic group (carboxy group) of a carboxylic acid is used together with two or more hydroxy groups include polyhydroxy alkanoic acids, such as 2,2-dimethylol acetic acid, 2,2-dimethylol lactic acid, 2,2-dimethylol propionic acid, 2,2-dimethylol butanoic acid, 2,2-dimethylol butyric acid, and 2,2-dimethylol valeric acid, and a more preferred example is 2,2-dimethylol propionic acid. One thereof can be used alone or two or more thereof can be used in combination. Among them, a part or all of the carboxylic acid is preferably neutralized with a basic compound or the like from the viewpoint of obtaining a urethane resin having a good aqueous dispersion stability.

The blending ratio of the active hydrogen group-containing compound (A4) having a hydrophilic group in 100 parts by mass of the urethane resin (A) is, from the viewpoint of achieving a good aqueous dispersion stability, preferably 3 to 20 parts by mass, and more preferably 4 to 10 parts by mass.

(Diisocyanate (A5))

The coating agent for a vapor deposited film of the present invention is characterized by containing the urethane resin (A), the urethane resin (A) being a reaction product of a composition that contains the polyester (A3) which is a polycondensate of the polycarboxylic acid component (A1) and the polyhydric alcohol component (A2), the active hydrogen group-containing compound (A4) having a hydrophilic group, and the diisocyanate (A5). The diisocyanate (A5) will form a hard segment which is hardly permeable to oxygen in the resulting urethane resin (A) so that a coating film obtained by using the resulting urethane resin (A) develops good gas barrier properties, which is useful.

Examples of the diisocyanate (A5) include tolylene diisocyanate (TDI), diphenylmethane diisocyanate, xylylene diisocyanate, hexamethylene diisocyanate, phenylene diisocyanate, 4,4'-diphenyl diisocyanate, 1,5-naphthalene diisocyanate, diphenylmethane diisocyanate, 4,4'-toluidine diisocyanate, 4,4'-diphenyl ether diisocyanate, tetramethylxylylene diisocyanate, trimethylene diisocyanate, 1,2-propylene diisocyanate, butylene diisocyanate, 1,5-pentamethylene diisocyanate, 1,6-hexamethylene diisocyanate, 2,4,4- or 2,2,4-trimethylhexamethylene diisocyanate, 1,3-cyclopentane diisocyanate, 1,3-cyclopentene diisocyanate, cyclohexane diisocyanate, methylcyclohexane diisocyanate, and norbornane diisocyanate. Among them, from the viewpoints of increasing the gas barrier properties of a resulting coating film and forming a uniform coating film owing to an increase in film formability, tolylene diisocyanate and isophorone diisocyanate are preferred, and tolylene diisocyanate is more preferred. One thereof can be used alone or two or more thereof can be used in combination.

The coating agent for a vapor deposited film of the present invention preferably contains tolylene diisocyanate in an amount of 50 to 100% by mass based on 100% by mass of the total amount of the diisocyanate (A5), more preferably in an amount of 60 to 100% by mass, and further preferably in an amount of 70 to 100% by mass. Within the above range, a hard segment which is hardly permeable to oxygen will be formed in the resulting urethane resin (A) so that a coating film develops good gas barrier properties, which is useful.

The blending ratio of the diisocyanate (A5) in 100 parts by mass of the urethane resin (A) is, from the viewpoints of increasing the gas barrier properties of a resulting coating film and forming a uniform coating film owing to an increase in film formability, preferably 10 to 50 parts by mass, and more preferably 15 to less than 40 parts by mass.

(Chain Extender (A6))

The coating agent for a vapor deposited film of the present invention contains the urethane resin (A), the urethane resin (A) being a reaction product of a composition that contains the polyester (A3) which is a polycondensate of the polycarboxylic acid component (A1) and the polyhydric alcohol component (A2), the active hydrogen group-containing compound (A4) having a hydrophilic group, and the diisocyanate (A5), and the composition preferably further contains a chain extender (A6). When the chain extender (A6) is used, the resulting urethane resin (A) develops a higher cohesive power so that the gas barrier properties of a resulting coating film can be increased, which is useful.

As the chain extender (A6), any one that has two or more active groups that react with the isocyanate groups of the diisocyanate (A5) can be used with no particular limitation, and in general, a chain extender having two hydroxy groups or amino groups can be mainly used.

Examples of the chain extender having two hydroxy groups include glycols, for example, aliphatic glycols, such as ethylene glycol, propylene glycol, and butanediol, aromatic glycols, such as xylylene glycol and bishydroxyethoxybenzene, and an ester glycol, such as neopentylglycol hydroxypivalate. One thereof can be used alone or two or more thereof can be used in combination.

Examples of the chain extender having two amino groups include aromatic diamines, such as tolylenediamine, xylylenediamine, and diphenylmethanediamine, aliphatic diamines, such as ethylenediamine, propylenediamine, hexanediamine, 2,2-dimethyl-1,3-propanediamine, 2-methyl-1,5-pentanediamine, trimethylhexanediamine, 2-butyl-2-ethyl-1,5-pentanediamine, 1,8-octanediamine, 1,9-nonanediamine, and 1,10-decanediamine, and alicyclic diamines, such as 1-amino-3-aminomethyl-3,5,5-trimethylcyclohexane, dicyclohexylmethanediamine, isopurobiritin cyclohexyl-4,4'-diamine, 1,4-diaminocyclohexane, and 1,3-bisamonomethylcyclohexane. One thereof can be used alone or two or more thereof can be used in combination.

The blending ratio of the chain extender (A6) in 100 parts by mass of the urethane resin (A) is, from the viewpoint of adjusting the cohesive power of the urethane resin, preferably 0 to 10 parts by mass, and more preferably 0 to 8 parts by mass.

(Aqueous Medium (B))

The coating agent for a vapor deposited film of the present invention is characterized by containing the aqueous medium (B). Since the coating agent for a vapor deposited film contains the aqueous medium (B), an organic solvent which is usually used is not used, there is no problem of a residual solvent and a harmful organic solvent is not discharged into the atmosphere, which is preferable.

The aqueous medium (B) is not particularly limited, and examples thereof include, besides water, alcohols and ketones. Examples of the alcohols include methanol, ethanol, isopropanol (isopropyl alcohol), butanol, 2-ethylhexyl alcohol, other alkanols (C5 to 38) and aliphatic unsaturated alcohols (C9 to 24), alkenyl alcohols, 2-propen-1-ol, alkadienols (C6 to 8), 3,7-dimethyl-1,6-octadien-3-ol, ethylene glycol, propylene glycol, glycerol, diethylene glycol, and dipropylene glycol. Examples of the ketones include acetone and methyl ethyl ketone. Among them, water and/or isopropyl alcohol is preferred, and a mixed solvent of water and isopropyl alcohol is particularly preferred. One thereof can be used alone or two or more thereof can be used in combination.

The blending ratio of the aqueous medium (B) in 100 parts by mass of the coating composition is, from the viewpoints of promoting a uniform formation of a coating film and increasing the drying speed of the aqueous medium, preferably 80 parts by mass or more, and more preferably 80 to 90 parts by mass.

(Curing Agent (C))

The coating agent for a vapor deposited film of the present invention preferably contains a curing agent (C) (crosslinking agent). When the coating agent for a vapor deposited film contains the curing agent (C) (hereinafter sometimes referred to as "crosslinking agent"), the urethane resin (A) (particles) and the the curing agent (C) react, which is preferable in terms of increasing the gas barrier properties, the retort resistance, and adhesive properties of a resulting coating film.

Examples of the curing agent (C) include a melamine crosslinking agent, a carbodiimide crosslinking agent, a water dispersible polyisocyanate crosslinking agent, an epoxy crosslinking agent, an oxazoline crosslinking agent, and an aziridine crosslinking agent. Among them, from the viewpoint of the gas barrier properties, the adhesive properties, and the reaction rate of the crosslinking agent, at least one selected from the group consisting of a melamine crosslinking agent, a carbodiimide crosslinking agent, and a water dispersible polyisocyanate crosslinking agent is preferred, and a melamine crosslinking agent is more preferred. When the melamine crosslinking agent is used, an acid catalyst for a melamine crosslinking agent can be used for increasing the rate of the crosslinking reaction. One thereof can be used alone or two or more thereof can be used in combination.

The blending ratio of the curing agent (C) relative to 100 parts by mass the urethane resin (A) is, from the viewpoint of securing good adhesive properties and gas barrier properties of a resulting coating film, preferably 2 to 10 parts by mass, and more preferably 3 to 7 parts by mass.

(Gas Capture Component)

To the coating agent for a vapor deposited film of the present invention, a material having a gas capture function may be further added as required. Examples of a material having an oxygen capture function include low molecular organic compounds that react with oxygen, such as a hindered phenol, vitamin C, vitamin E, an organic phosphorus compound, gallic acid, and pyrogallol, and compounds of transition metals, such as cobalt, manganese, nickel, iron, and copper. Examples of a material having a water vapor capture function include silica gel, zeolite, active carbon, and calcium carbonate. Besides the above materials, a capture component for a gas to be blocked can be added.

(Other Additives)

To the coating agent for a vapor deposited film of the present invention, various additives can be further blended as required. Examples of the additives include an antioxidant, a heat stabilizer, a UV absorber, a plasticizer, an electrostatic agent, a lubricant, an antiblocking agent, a surfactant, a dispersion stabilizer, a colorant (pigment, dye, etc.), a filler, a colloidal silica, inorganic particles, inorganic oxide particles, a crystal nucleating agent, and a thermoplastic resin having gas barrier properties. The blending ratio of the additives is not particularly limited, and is appropriately set according to the purpose and application.

(Gas Barrier Film)

The present invention relates to a gas barrier film obtained by coating a vapor deposited film with the coating agent for a vapor deposited film. By using the coating agent for a vapor deposited film, the gas barrier film is superior in the gas barrier properties and is useful.

(Vapor Deposited Film)

The gas barrier film of the present invention enhances the gas barrier properties of a vapor deposited film, and as an object to be coated with the coating agent for a vapor deposited film, various types of vapor deposited films are used. A film coated with the coating agent for a vapor deposited film is more superior in the gas barrier properties to a normal vapor deposited film, and thus, can be used as a high-gas-barrier film.

(Types of Vapor Deposition Layer)

The type of the vapor deposition layer of the vapor deposited film is not particularly limited as long as gas barrier properties can be imparted. Metal vapor deposition or metal oxide vapor deposition which is now widely used for package is suitably exemplified. Various metals can be exemplified for the metal vapor deposition, but aluminum which is inexpensive and is widely used is preferred.

As the metal oxide, aluminum oxide (AlOx) and silicon oxide (SiOx) are preferably exemplified as versatile materials. Besides, a film in which various types of organic compounds or inorganic compounds are vapor-deposited or a film in which two or more materials are vapor-deposited may be used. As the vapor deposition method, a vacuum vapor deposition method which is a physical vapor deposition method and a CVD method which is a chemical vapor deposition method can be exemplified with no particular limitation.

The thickness of the vapor deposition layer is not particularly limited as long as a certain level of gas barrier function can be developed even by a vapor deposition layer alone and a film having a higher barrier function can be given by further setting a coating layer thereon. However, when the vapor deposition layer is too thin, contribution of the vapor deposition layer to the gas barrier is reduced so that a sufficient gas barrier function is not developed even when the coating agent of the present invention is used, but the barrier increasing function is also low with a too-large thickness of a certain level or higher. Thus, the thickness is preferably 3 to 70 nm, and further preferably 5 to 60 nm. A vapor deposited film in which an overcoat or undercoat is applied in advance for protecting the vapor deposition can be used or a vapor deposited film without such an overcoat or undercoat can also be used. Note that a vapor deposited film without a coating layer is preferably used since the barrier increasing function of the coating agent of the present invention can then be sufficiently exhibit.

(Adhesive Agent Layer)

An adhesive agent layer is a cured coating film of an adhesive agent and is used for laminating a gas barrier film with a film having another function, such as heat sealability. A usable adhesive agent is not particularly limited, and a solvent-type or a non-solvent-type adhesive agent can be used.

(Type of Film)

A film (substrate) on which the coating agent for a vapor deposited film of the present invention is used is not particularly limited, and a thermoplastic resin film can be appropriately selected according to the desired application. Examples for packaging a food include polyolefin films, such as a polyethylene terephthalate (PET) film, a polystyrene film, a polyamide film, a polyacrylonitrile film, a polyethylene film (LLDPE: linear low density polyethylene film, HDPE: high density polyethylene film), and a polypropylene film (CPP: cast polypropylene film, OPP: oriented polypropylene film), a polyvinyl alcohol film, an ethylene-vinyl alcohol copolymer film, and a cycloolefin copolymer film. The films both with or without a stretching treatment can be preferably used. Films that have been subjected to a stretching treatment have advantages of easy coating operation and usability due to its size stability and rigidity. In contrast, since an unstretched film is poor in the size stability, rigidity, and heat resistance of a substrate, the vapor deposition layer has many defects and the gas barrier is not stabilized in many cases, and thus, there is an advantage in that use of the coating agent for a vapor deposited film can provide a great effect in strengthening the barrier function.

In the present invention, in order to impart a higher barrier function, a barrier film containing a gas barrier layer of polyvinyl alcohol, an ethylene/vinyl alcohol copolymer, vinylidene chloride, or the like may be used together to impart a higher barrier function.

(Coating Method)

A method for coating with the coating agent for a vapor deposited film of the present invention is not particularly limited as long as a vapor deposition surface of a vapor deposited film can be coated therewith. As a specific method, various coating methods, such as roll coating and gravure coating, can be exemplified. An apparatus used for the coating is not particularly limited.

(Coating Thickness)

The thickness of application of the coating agent of the present invention is not limited, but, for example, a thickness of 0.1 $\mu$m or more can give a barrier increasing effect, and the thickness is preferably in the range of 0.2 to 5 $\mu$m because of the balance with drying properties.

(Layer Structure in which Coating Agent Is Used)

As a layer structure in which the coating agent of the present invention is used, the following structures are assumed. Note that, by applying the coating agent directly above a vapor deposition layer, good gas barrier properties can be imparted.

1) Film + metal oxide vapor deposition layer + coating agent (coating film) + adhesive agent layer + CPP film

2) Film + metal oxide vapor deposition layer + coating agent (coating film) + ink + adhesive agent layer + CPP film

3) Film + metal vapor deposition layer + coating agent (coating film) + adhesive agent layer + CPP film

4) Film + metal vapor deposition layer + coating agent (coating film) + ink + adhesive agent layer + CPP film

(Type of Gas Component Whose Permeation Can Be Blocked)

Examples of gases that can be blocked by a gas barrier film in which the coating agent of the present invention is used include, besides oxygen and water vapor, carbon dioxide, inert gases, such as nitrogen and argon, alcohol components, such as methanol, ethanol, and propanol, phenols, such as phenol and cresol, flavor components containing a low molecular compound, for example, fragrance components, such as soy source, source, miso, limonene, menthol, methyl salicylate, coffee, cocoa shampoo, and conditioner.

(Packaging Material and Other Applications)

The present invention relates to a packaging material with the gas barrier film. The coating agent of the present invention enhances the barrier properties against water vapor and oxygen of a vapor deposited film and also has a high lamination strength, and thus, can be used for various packaging materials that require lamination operation. Furthermore, examples of other applications include a coating agent for an electronic material, such as an adhesive agent for a protection film for a solar cell or a coating agent of a water vapor barrier substrate for a display device, a coating agent for a construction material, and a coating for an industrial material. Thus, the packaging material can be suitably used in any application in which strengthening of the gas barrier properties to water vapor or oxygen is desired. Examples

Next, the present invention will be described more specifically with reference to Examples and Comparative Examples, but the present invention is not to be limited by the following examples. Unless otherwise defined, "parts" and "%" are by mass.

(Acid Number (AN) of Polyester Polyol (Polyester))

Acid number (mgKOH/g) was measured by an acid number measurement method described in JIS-K0070.

(Hydroxy Value (OHV) of Polyester Polyol (Polyester))

Hydroxy value (mgKOH/g) was measured by a hydroxy value measurement method described in JIS-K0070.

(Number Average Molecular Weight (Mn) of Polyester Polyol (Polyester))

Number average molecular weight of polyester polyol was determined by calculation according to the following formula.

$$Mn = 2 \times 56110 / (OHV + AN)$$

(Synthesis of PEs-1)

To a polyester reaction vessel equipped with a stirrer, a nitrogen gas introduction pipe, a rectifying column, a water separator, and the like, 621 parts of phthalic anhydride, 380 parts of ethylene glycol, and 0.05 parts of titanium tetraisopropoxide were placed, and were gradually heated so that the temperature at an upper part of the rectifying column did not exceed 100°C to maintain the internal temperature at 220°C. Once the acid number became 10 mgKOH/g or lower, the heating was continued under a reduced pressure of 100 torr, and once the acid number became 1 mgKOH/g or lower, the esterification reaction was ended, thereby obtaining a polyester polyol (polyester) "PEs-1" having a number average molecular weight, which was calculated from the hydroxy value, of 518.

Then, polyester polyols "PEs-2" to "PEs-8" were synthesized according to Table 1 in the same manner as for the polyester polyol "PEs-1".

[Table 1]

| Synthesis of polyester polyol (polyester) | | Polyester polyol | | | | | | | |
|---|---|---|---|---|---|---|---|---|---|
| | | PEs-1 | PEs-2 | PEs-3 | PEs-4 | PEs-5 | PEs-6 | PEs-7 | PEs-8 |
| Polycarboxylic acid | Terephthalic acid | | | 319 | | 150 | | | |
| | Isophthalic acid | | | 319 | 351 | | | | |
| | Phthalic anhydride | 621 | 661 | | | 140 | 520 | 500 | 462 |
| | Adipic acid | | | | 77 | 410 | | | |
| | Sebacic acid | | | | 177 | | | | |
| Polyhydric alcohol | Ethylene glycol | 380 | 339 | 131 | 64 | 300 | | | |
| | Neopentyl glycol | | | | 214 | | | 480 | |
| | Diethylene glycol | | | 231 | | | 480 | 20 | 539 |
| | Hexamethylene glycol | | | | 116 | | | | |
| Physical properties | Hydroxy value of polyester polyol | 216 | 112 | 49 | 63 | 20 | 114 | 110 | 220 |
| | Acid number of polyester polyol | 0.7 | 0.5 | 0.7 | 0.6 | 0.4 | 0.3 | 0.6 | 0.7 |
| | Number average molecular weight of polyester polyol | 518 | 398 | 2258 | 1764 | 5501 | 982 | 1015 | 508 |

(Synthesis of Urethane Resin 1)

To a four-neck flask equipped with a thermometer, a stirrer, a reflux condenser, and a nitrogen introduction pipe, 338 parts of the polyester polyol "PEs-1" obtained above, 74 parts of ethylene glycol, 88 parts of 2,2-dimethylol propionic acid (DMPA), and 600 parts of methyl ethyl ketone were added, and then, 435 parts of tolylene diisocyanate (TDI) was added thereto, followed by a reaction at 75°C for 8 hours. Next, after cooling to 50°C, 66 parts of triethylamine was added for neutralization, and 4200 parts of water was added to obtain an aqueous solution. From the resulting transparent reaction product, methyl ethyl ketone was removed under a reduced pressure at 40 to 60°C, and then, water was added to adjust the concentration, thereby obtaining a stable urethane resin 1 having a nonvolatile content of 23%.

Then, urethane resins 2 to 7 were synthesized according to Table 2 in the same manner as for the urethane resin 1.

[Table 2]

| Synthesis of urethane resin | | Urethane resin | | | | | | |
|---|---|---|---|---|---|---|---|---|
| | | 1 | 2 | 3 | 4 | 5 | 6 | 7 |
| Polyester polyol | PEs-1 | 33.8 | | | | | | |
| | PEs-2 | | 56.5 | 69.6 | | | | |
| | PEs-3 | | | | 16.9 | | | |
| | PEs-4 | | | | 50.7 | 1.0 | | |
| | PEs-5 | | | | | 32.5 | | |
| | PEs-6 | | | | | 19.1 | 69.7 | |
| | PEs-7 | | | | | 14.4 | | |
| | PEs-8 | | | | | | | 33.8 |

(continued)

| Synthesis of urethane resin | | Urethane resin | | | | | | |
|---|---|---|---|---|---|---|---|---|
| | | 1 | 2 | 3 | 4 | 5 | 6 | 7 |
| Active hydrogen group-containing compound having hydrophilic group | DMPA | 8.8 | 6.0 | 6.0 | 6.0 | 5.7 | 6.0 | 8.8 |
| Chain extender | 1,4-Butanediol | | | | 2.9 | 2.8 | | |
| | Ethylene glycol | 7.4 | 4.0 | | | | | 7.3 |
| Diisocyanate | TDI | 46.5 | 29.0 | 19.9 | 19.0 | 20.2 | 19.9 | 43.5 |
| Neutralizing agent | Triethylamine | 6.6 | 4.5 | 4.5 | 4.5 | 4.3 | 4.5 | 6.6 |
| Content of aromatic dicarboxylic acid in polycarboxylic acid component (mass%) | | 100 | 100 | 100 | 69 | 66 | 100 | 100 |
| Content of TDI based on total amount of diisocyanate (mass%) | | 100 | 100 | 100 | 100 | 100 | 100 | 100 |

(Preparation of Coating Agent and Production of Barrier Lamination Film)

(Example 1)

To 100 parts of the urethane resin 1 obtained above, a curing agent (crosslinking agent) and a catalyst were added according to Table 3 and were diluted with water and isopropyl alcohol (IPA) which were aqueous media, thereby preparing a uniform coating agent having a nonvolatile content of 15%.

Then, coating agents of Examples 2 to 9 and Comparative Examples 2 to 5 were prepared according to Tables 3 and 4 in the same manner as in Example 1. Comparative Example 1 is an example without use of a coating agent and Example 3 is an example without use of a curing agent.

[Table 3]

| Preparation of coating agent In parentheses: nonvolatile content (mass%) | | Example | | | | | | | | |
|---|---|---|---|---|---|---|---|---|---|---|
| | | 1 | 2 | 3 | 4 | 5 | 6 | 7 | 8 | 9 |
| Urethane resin 1 | (23) | 100 | | | | | | | | |
| Urethane resin 2 | (23) | | 100 | | | | | | | |
| Urethane resin 3 | (23) | | | 100 | | | | | | |
| Urethane resin 4 | (23) | | | | 100 | 100 | 100 | 100 | 100 | |
| Urethane resin 5 | (25) | | | | | | | | | 100 |
| Urethane resin 6 | (23) | | | | | | | | | |
| Urethane resin 7 | (23) | | | | | | | | | |
| XW3106 | (100) | 5.8 | 5.8 | | | 5.8 | | | | 6.3 |
| SV-02 | (40) | | | | | | 9.4 | | | |
| V-02-L2 | (40) | | | | | | | 9.4 | | |
| WT31-100 | (100) | | | | | | | | 3.8 | |
| NACURE2500 | (25) | 0.6 | 0.6 | | | 0.6 | | | | 0.6 |
| IPA | - | 67 | 67 | 46 | 46 | 67 | 57 | 57 | 60 | 78 |
| Water | - | 67 | 67 | 46 | 46 | 67 | 57 | 57 | 60 | 78 |

[Table 4]

| Preparation of coating agent | | Comparative Example | | | | |
|---|---|---|---|---|---|---|
| In parentheses: nonvolatile content (mass%) | | 1 | 2 | 3 | 4 | 5 |
| Urethane resin 1 | (23) | | | | | |
| Urethane resin 2 | (23) | | | | | |
| Urethane resin 3 | (23) | | | | | |
| Urethane resin 4 | (23) | | | | | |
| Urethane resin 5 | (25) | | | | | |
| Urethane resin 6 | (23) | | 100 | | 100 | |
| Urethane resin 7 | (23) | | | 100 | | 100 |
| XW3106 | (100) | | | | 5.8 | 5.8 |
| SV-02 | (40) | | | | | |
| V-02-L2 | (40) | | | | | |
| WT31-100 | (100) | | | | | |
| NACURE2500 | (25) | | | | 0.6 | 0.6 |
| IPA | - | | 46 | 46 | 67 | 67 |
| Water | - | | 46 | 46 | 67 | 67 |

Here, abbreviations of curing agents (crosslinking agents), catalysts, and the like in Tables 3 and 4 were shown below.

(Crosslinking agent)

XW3106: CYMEL XW3106 (melamine crosslinking agent), manufactured by Allnex
SV-02: CARBODILITE SV-02 (carbodiimide crosslinking agent), manufactured by Nisshinbo Chemical Inc.
V-02-L2: CARBODILITE V-02-L2 (carbodiimide crosslinking agent), manufactured by Nisshinbo Chemical Inc.
WT31-100: DURANATE WT31-100 (aqueous dispersion-type polyisocyanate), manufactured by Asahi Kasei Corp.
(Catalyst)
NACURE2500: NACURE2500 (acid catalyst for melamine crosslinking agent), manufactured by KING INDUSTRIES

Each coating agent obtained above was applied on the vapor deposition surface side of an alumina-vapor-deposited PET film (Barrialox 1011HG #12, manufactured by TORAY ADVANCED FILM Co., Ltd.) as a substrate with a bar coater #4 so as to give an application amount of 0.5 g/m2 (solid content), and the resulting film was placed in a drying machine set at 150°C for 1 minute, thereby obtaining a gas barrier film having a uniform coating layer (coating film).

Next, on the surface of the coating layer, DIC DRY LX-703 VL (solvent-type polyester polyol, manufactured by DIC Graphics Corporation) and KR-90 (polyisocyanate crosslinking agent, manufactured by DIC Graphics Corporation) were blended at a mass ratio of 15/1, and ethyl acetate was blended so as to give a nonvolatile content of 30%, thereby obtaining an adhesive agent.

The resulting adhesive agent was applied with a bar coater so as to give an application amount of 3.0 g/m2, and the solvent was volatilized by hot air of 80°C with a dryer, thereby forming an adhesive agent layer.

Next, dry lamination with CPP film, ZK-207 (manufactured by Toray Industries, Inc., 70 μm thickness) was performed at a temperature of 40°C, a pressure of 0.4 MPa, and a lamination rate of 40 m/min, thereby obtaining a lamination film. The lamination film was allowed to stand in a drying machine of a temperature set at 40°C for 3 days to be dried and cured, thereby obtaining a barrier lamination film for test evaluation.

(Oxygen Permeability under Normal Conditions)

For the resulting barrier lamination film, the oxygen permeability (cc/(m2·day·atm)) under normal conditions was measured in a 23°C × 0%RH (relative humidity) atmosphere using OX-TRAN 2/22 manufactured by MOCON according to JIS-K7126 (Equal pressure method).

(Oxygen Permeability after Retort Treatment)

Three sides of the resulting barrier lamination film were sealed to produce a pouch containing water, and then, a retort treatment was performed at 121°C for 30 minutes. Subsequently, the oxygen permeability (cc/(m2·day·atm)) after the retort treatment was measured in the same manner as for the oxygen permeability under normal conditions described above.

The oxygen permeabilities under normal conditions and after the retort treatment are preferably 7 cc/(m2·day·atm) or less, more preferably 6 cc/(m2·day·atm) or less, and further preferably 5 cc/(m2·day·atm).

(Lamination Adhesive Strength under Normal Conditions)

The resulting barrier lamination film was cut into 15 mm width in an application direction, and the tensile strength in peeling the laminated films (the adhesive agent layer and the coating layer) by a 180 degree peeling method using Tabletop Material Testing Instrument STB-1225L manufactured by A&D Company, Limited at an atmospheric temperature of 25°C and at a peeling rate set to 300 mm/minute was taken as the lamination strength (N/15 mm).

(Lamination Adhesive Strength after Retort Treatment)

Three sides of the resulting barrier lamination film were sealed to produce a pouch containing water, and then, a retort treatment was performed at 121°C for 30 minutes. Subsequently, the lamination adhesive strength (N/15 mm) after the retort treatment was measured in the same manner as for the lamination adhesive strength under normal conditions described above.

The lamination adhesive strengths under normal conditions and after the retort treatment are preferably 1.0 N/15 mm or more, more preferably 1.5 N/15 mm or more, and further preferably 2.5 N/15 mm or more.

Hereinunder, the evaluation results of lamination films of Examples and Comparative Examples were shown in Tables 5 and 6.

[Table 5]

| Evaluation result | | Example | | | | | | | | |
|---|---|---|---|---|---|---|---|---|---|---|
| | | 1 | 2 | 3 | 4 | 5 | 6 | 7 | 8 | 9 |
| Oxygen permeability | Normal conditions | 2.1 | 2.4 | 1.5 | 3.0 | 2.9 | 2.8 | 3.3 | 2.1 | 2.7 |
| | After retort treatment | 3.2 | 5.4 | 2.3 | 3.2 | 3.2 | 3.1 | 3.5 | 2.9 | 3.5 |
| Lamination adhesive strength | Normal conditions | 2.5 | 3.1 | 3.6 | 6.5 | 4.0 | 3.6 | 3.7 | 3.5 | 4.3 |
| | After retort treatment | 3.6 | 2.6 | 2.8 | 4.7 | 2.8 | 3.2 | 3.2 | 3.3 | 2.8 |

[Table 6]

| Evaluation result | | Comparative Example | | | | |
|---|---|---|---|---|---|---|
| | | 1 | 2 | 3 | 4 | 5 |
| Oxygen permeability | Normal conditions | 3.7 | 2.1 | 2.1 | 2.0 | 1.9 |
| | After retort treatment | 8.4 | 71.4 | delamination | 16.9 | 71.6 |
| Lamination adhesive strength | Normal conditions | 4.1 | 3.6 | 3.4 | 3.7 | 2.1 |
| | After retort treatment | 4.4 | 2.9 | delamination | 2.9 | 3.0 |

It was found from the evaluation results in Table 5 that all of Examples had a low oxygen permeability under normal conditions and after a retort treatment and thus, were superior in the gas barrier properties. It was found that all of Examples exhibited a high lamination strength and thus, were superior also in the adhesive properties.

On the other hand, it was found that, in Comparative Example 1 in which the vapor deposition layer had no coating layer, the oxygen permeabilities under normal conditions and after a retort treatment were inferior as compared with Examples.

It was found that, in Comparative Examples 2 to 5 in which no alkylene glycol having 2 to 6 carbon atoms was used in raw materials in preparing the coating agent, hydrophilicity of the polyester polyol structure was high and deterioration in the coating film due to the retort treatment was liable to occur, and thus, the oxygen permeability after the retort treatment was significantly inferior.

It was found that, in Comparative Example 3 in which diethylene glycol was used as a polyester polyol, the adhesive properties of a coating film after the retort treatment decreased due to the high hydrophilicity, and in addition to that, the mass ratio of tolylene diisocyanate in the urethane resin was as high as 40% or more, resulting in a hard coating film, and thus, delamination after a retort treatment occurred and the oxygen permeability and lamination strength could not be measured and were not a practical level.

**Claims**

1.  A coating agent for a vapor deposited film, the coating agent comprising a urethane resin (A) and an aqueous medium (B),

    the urethane resin (A) being a reaction product of a composition that contains a polyester (A3) which is a polycondensate of a polycarboxylic acid component (A1) and a polyhydric alcohol component (A2), an active hydrogen group-containing compound (A4) having a hydrophilic group, and a diisocyanate (A5),
    the urethane resin (A) having an ester skeleton derived from the polyester (A3),
    the polycarboxylic acid (A1) containing at least one of an aromatic dicarboxylic acid and an acid anhydride thereof in an amount of 10 to 100% by mass based on 100% by mass of a total amount of the polycarboxylic acid (A1),
    the polyhydric alcohol component (A2) containing an alkylene glycol having 2 to 6 carbon atoms.

2.  The coating agent for a vapor deposited film according to claim 1, wherein the composition further contains a chain extender (A6).

3.  The coating agent for a vapor deposited film according to claim 1, comprising a curing agent (C).

4.  The coating agent for a vapor deposited film according to claim 1, wherein the diisocyanate (A5) contains tolylene diisocyanate in an amount of 50 to 100% by mass based on 100% by mass of a total amount of the diisocyanate (A5).

5.  The coating agent for a vapor deposited film according to claim 1, wherein the aqueous medium (B) is water and/or isopropyl alcohol.

6.  The coating agent for a vapor deposited film according to claim 3, wherein the curing agent (C) is at least one selected from the group consisting of a melamine crosslinking agent, a carbodiimide crosslinking agent, and a water dispersible polyisocyanate crosslinking agent.

7.  A gas barrier film obtained by coating a vapor deposited film with the coating agent for a vapor deposited film according to any one of claims 1 to 6.

8.  A packaging material with the gas barrier film according to claim 7.

## INTERNATIONAL SEARCH REPORT

| International application No. |
|---|
| **PCT/JP2023/015708** |

**A. CLASSIFICATION OF SUBJECT MATTER**

*C09D 175/06*(2006.01)i
FI: C09D175/06

According to International Patent Classification (IPC) or to both national classification and IPC

**B. FIELDS SEARCHED**

Minimum documentation searched (classification system followed by classification symbols)

C09D175/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2004-238403 A (TOYO BOSEKI) 26 August 2004 (2004-08-26)<br>entire text, all drawings | 1-8 |
| A | WO 2012/039259 A1 (MITSUI CHEMICALS INC) 29 March 2012 (2012-03-29)<br>entire text, all drawings | 1-8 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 July 2023** | **18 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/015708**

| Patent document cited in search report | | | Publication date (day/month/year) | Patent family member(s) | Publication date (day/month/year) |
|---|---|---|---|---|---|
| JP | 2004-238403 | A | 26 August 2004 | (Family: none) | |
| WO | 2012/039259 | A1 | 29 March 2012 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012101505 A
- JP 2012250470 A